# EUROPÄISCHE PATENTSCHRIFT

(11) **EP 1 525 243 B1**
(45) Veröffentlichungstag und Bekanntmachung des Hinweises auf die Patenterteilung: **25.02.2009**
(21) Anmeldenummer: 03766250.9
(22) Anmeldetag: 22.07.2003
(51) Int. Cl.: C08G 18/10, C08G 18/42, C09J 175/04

(54) **SEGMENTIERTE POLYURETHAN-SCHMELZKLEBSTOFF-ZUSAMMENSETZUNGEN**
SEGMENTED POLYURETHANE MELT ADHESIVE COMPOSITIONS
COMPOSITIONS DE COLLE THERMOPLASTIQUE A POLYURETHANNE SEGMENTEES

(30) Priorität: 31.07.2002 DE 10235090
(43) Veröffentlichungstag der Anmeldung: 27.04.2005
(73) Patentinhaber: Henkel AG & Co. KGaA, 40589 Düsseldorf (DE)
(72) Erfinder: KREBS, Michael, 40724 Hilden (DE); FRANKEN, Uwe, 41542 Dormagen (DE); LOHR, Christoph, 40822 Mettmann (DE)
(86) Internationale Anmeldenummer: PCT/EP2003/007968
(87) Internationale Veröffentlichungsnummer: WO 2004/013199

(56) Entgegenhaltungen:
- WO-A-01/46330
- WO-A-91/15530
- US-A- 3 931 077
- US-A- 5 883 217

## Beschreibung

Die vorliegende Erfindung betrifft reaktive Polyurethan-Schmelzklebstoff-Zusammensetzungen auf der Basis von Polyether- bzw. Polyester basierten isocyanatgruppenhaltigen Prepolymeren sowie reaktiven segmentierten Blockcopolymeren.

Reaktive Polyurethan- Kleb- und -Dichtstoffe auf der Basis von Prepolymeren mit freien Isocyanatgruppen zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt. Hierzu zählen insbesondere auch reaktive, einkomponentige, feuchtigkeitshärtende Polyurethan-Schmelzklebstoffe.

Diese sind bei Raumtemperatur fest und werden in Form ihrer Schmelze als Klebstoff appliziert, die polymeren Bestandteile der Polyurethan-Schmelzklebstoffe enthalten Urethangruppen sowie reaktionsfähige Isocyanatgruppen. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von isocyanatterminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert. Eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und die zweite Komponente Polymere bzw. Oligomere mit Hydroxylgruppen, Aminogruppen, Epoxigruppen und/oder Carboxylgruppen enthält. Bei diesen zweikomponentigen Systemen werden die isocyanatgruppenhaltige Komponente und die zweite Komponente unmittelbar vor der Applikation gemischt, im Normalfall mit Hilfe eines Misch- und Dosiersystems.

Der Hauptvorteil von Schmelzklebern gegenüber anderen Klebstoffsystemen liegt in ihrer Fähigkeit, sehr schnell abzubinden, sowie in dem Fehlen von Wasser und Lösemitteln in ihrer Zusammensetzung.
Entsprechende feuchtigkeitshärtende Polyurethan-Schmelzkleber zum Verkleben diverser Trägermaterialien sind vorbekannt.

So beschreibt DE-A-32 36 313 einen Schmelzkleber, der ein prepolymeres Isocyanat, ein thermoplastisches Polymer sowie ein Kunstharz von niedrigem Molekulargewicht, ausgewählt aus der Gruppe der Ketonharze, Keton-Aldehyd-Kondensationsharze und / oder Hydrierungsprodukten von Acetophenon-Kondensationsharzen, enthält. Bei dem prepolymeren Isocyanat handelt es sich um ein reaktives Polyurethan-Präpolymer eines aromatischen Diisocyanats und/oder ein Präpolymer dieses Diisocyanats mit einem kurzkettigen Diol sowie eines Polyethers oder Polyesters, der neben OH-Gruppen auch ein kurzkettiges Diol enthält.

Gemäß EP-A-248 658 sind Polyurethan-Schmelzkleber aus einem Reaktionsprodukt von Diisocyanaten und kristallinen Polyester-Diolen herstellbar, wobei letztere aus symmetrischen aromatischen Dicarbonsäuren synthetisiert werden und einen Säuregehalt von mindestens 50 Mol-% aufweisen. Bei bevorzugten Ausführungsformen werden dabei die freien Isocyanatgruppen blockiert, z.B. mittels Acetylaceton. Diese Maßnahme verringert die Feuchtigkeitsempfindlichkeit des Schmelzklebers und erhöht damit seine Lagerbeständigkeit, andererseits wird jedoch die Abbindegeschwindigkeit wesentlich erniedrigt, da die Isocyanat-Gruppe mit Blick auf die Anwendungstemperatur zunächst mittels eines Entblockierungsschritts wieder in ihre reaktive Form überführt werden muss.

EP 0293602 B1 beschreibt kompatible Mischungen zur Bildung von reaktiven Schmelzklebstoffen auf Basis von Polyurethanen enthaltend ein Reaktionsprodukt eines Polyalkylenpolyols und eines Isocyanates sowie thermoplastische Polymere mit reduzierter Polarität. Konkret genannt werden Polymere aus Ethylen-Vinylmonomeren, die einen Vinylmonomergehalt von etwa 1 bis 45 mol% haben, Polyolefinpolymere, radiale A-B-A-Blockcopolymere, A-(B-A)ₙ-B-Blockcopolymere oder A-B-A-Blockcopolymere in Kombination mit verträglichen, klebrigmachenden Harzen. Es wird ausgeführt, dass diese Klebstoffe gute Hitzestabilität, gute Anfangshaftfestigkeit, gute Lagerstabilität und eine gute Durchhärtung haben.
US 47775719 beschreibt eine thermisch stabile, feuchtigkeitshärtende Schmelzklebstoff-Zusammensetzungen mit einer niedrigen Viskosität, einer sehr hohen Anfangsfestigkeit und Endfestigkeit. Diese Zusammensetzung soll ein flüssiges Polyurethan-Prepolymer, ein aromatisches oder aliphatischaromatisches klebrigmachendes Harz sowie eine polymere Polyethylen-Vinylmonomere enthaltende Komponente aufweisen, die einen Ethylenanteil von bis zu 55 Gew. % haben soll.

US-A-3931077 beschreibt eine Klebstoff-Zusammensetzung enthaltend ein reaktives Polyurethan-Prepolymer, ein thermoplastisches Harz auf der Basis von Ethylen-Vinylacetatcopolymeren, Ethylen-Acrylsäurecopolymeren, Ethylen-Acrylatcopolymeren, ataktischen Polypropylenen oder linearen Polyethylenterephthalat-Polymeren sowie ein klebrigmachendes Harz aus der Gruppe der Abietinsäureharze (Kolophoniumharze), deren aktiver Wasserstoff oder Doppelbindungen ganz oder teilweise durch Veresterung entfernt wurde sowie Terpen-Phenolcopolymere.

DE-A-2014170 beschreibt thermoplastische Polyurethane, die als Schmelzklebstoffe verwendet werden können. Diese Zusammensetzungen sind Reaktionsprodukte eines Isocyanatgruppen-haltigen Prepolymers mit einem OH-Gruppen terminierten Polyester, wobei der OH-terminierte Polyester im Überschuss eingesetzt werden soll. Demzufolge kann ein derartiger Schmelzklebstoff nicht mehr mit Feuchtigkeit unter Vernetzung aushärten.

WO 91/15530 beschreibt eine Urethanschmelzklebstoff-Zusammensetzung aus einem nicht reaktiven Polyester-Polyethercopolymer und einem Polyisocyanatprepolymer aus einem Polyol und einem polyfunktionellen Isocyanat mit einer Isocyanatfunktionalität von 2 oder mehr. In dem Polyester-Polyether-Copolymer soll der Säurebaustein überwiegend eine cyclische Carbonsäure sein. Dieser Schmelzklebstoff soll die Charakteristiken eines thermoplastischen Schmelzklebstoffes und eines reaktiven Klebstoffes haben, Flexibilität aufweisen und sowohl für klebende als auch abdichtende Funktionen eingesetzt werden können. Nachteilig ist bei derartigen Zusammensetzungen, dass sie einen sehr hohen Erweichungspunkt aufweisen und somit eine sehr hohe Aufschmelztemperatur zum Verflüssigen des Klebstoffes erfordern.

WO01/96436 beschreibt Zusammensetzungen enthaltend Umsetzungsprodukte eines Polyisocyanats mit einem Polyester-Block-Copolymer und ein Verfahren zu deren Herstellung. Dabei soll der Carboxyl-terminierte Polyesterblock aus aliphatischen Dicarbonsäuren, ausgewählt aus Adipinsäure, Pimelinsäure, Korksäure, Azelainsäure, Sebacinsäure, Undecandisäure, Dodecandisäure, oder deren Mischungen und difunktionellen Alkoholen ausgewählt aus Butandiol, Hexandiol, Octandiol, Decandiol, Dodecandiol oder deren Mischungen aufgebaut sein und mindestens ein Block durch (-(CH₂)₄-O-(CH₂)₄-)ₒ, (-C₃H₆-O-C₃H₆-)ₒ, (-C₂H₄-O-C₂H₄-)ₚ, den Rest eines Polybutadiens, Polycarbonates oder eines Polycaprolactons oder deren Kombination gebildet werden. Diese Zusammensetzungen eignen sich als feuchtigkeitshärtender Schmelzklebstoff. Gegebenenfalls kann die Schmelzklebstoffzusammensetzung noch ein Umsetzungsprodukt eines Polyisocyanats mit einem Polyesterpolyol und/oder ein Umsetzungsprodukt eines Polyisocyanats mit einem Polyetherpolyol enthalten. Derartige Polyurethan-Schmelzklebstoff-Zusammensetzungen sollen gute Kriechbeständigkeits- und Grenzflächen-Haftungswerte auf Kunststoffen aufweisen und sehr hohe Festigkeitswerte zeigen.

WO01/46330 beschreibt Zusammensetzungen enthaltend Umsetzungsprodukte eines Polyisocyanats mit einem Polyester-Polyether-Copolymer und ein Verfahren zu deren Herstellung. Das Polyester-Polyether-Copolymer soll dabei aus dem Block eines Carboxyl-terminierten Polyesters und dem Block eines Poly(oxytetramethylen)glycols, Poly(oxypropylen)glycols, Poly(oxyethylen)glycols oder deren Copolymeren aufgebaut sein. Der Carboxyl-terminierte Polyesterblock wird gemäß der Lehre dieser Schrift aus aliphatischen oder aromatischen Dicarbonsäuren, ausgewählt aus Adipinsäure, Pimelinsäure, Korksäure, Azelainsäure, Sebacinsäure, Undecandisäure, Dodecandisäure, Phthalsäure, Terephthalsäure, Isophthalsäure oder deren Mischungen und difunktionellen Alkoholen ausgewählt aus Ethylenglycol, Propylenglycol, Butandiol. Diethylenglycol, Triethylenglycol, Dipropylenglycol, Tripropylenglycol, Hexandiol, Octandiol, Decandiol, Dodecandiol oder deren Mischungen aufgebaut. Diese Zusammensetzungen sollen sich als feuchtigkeitshärtende Schmelzklebstoffe eignen, die gute Kriechbeständigkeits- und Grenzflächen-Haftungswerte auf Kunststoffen zeigen und sehr hohe Festigkeitswerte aufweisen.

Angesichts dieses Standes der Technik haben sich die Erfinder die Aufgabe gestellt, einen Klebstoff bereitzustellen, der ähnliche Eigenschaften wie ein Haftschmelzklebstoff hat, der jedoch nachvernetzend ist und der niedrige Temperaturen zum Aufschmelzen benötigt.

Die erfindungsgemäße Lösung der Aufgabe ist den Ansprüchen zu entnehmen, sie besteht im wesentlichen in der Bereitstellung einer Klebstoff-Zusammensetzung bestehend aus
a.) ein Umsetzungsprodukt eines Polyisocyanats im stöchiometrischen Überschuss mit einem hydroxyfunktionellen Polyester-ether -Block-Copolymer auf der Basis aromatischer Dicarbonsäuren,
b.) ein Umsetzungsprodukt eines Polyisocyanats mit einem Polyesterpolyol und/oder
c.) ein Umsetzungsprodukt eines Polyisocyanats mit einem Polyetherpolyol sowie
d) nicht reaktiven thermoplastischen Polymeren ausgewählt aus thermoplastischem Polyurethan, thermoplastischen Polyester Block- Copolymeren, thermoplastischen Polyetheramiden, (Co)polymeren aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatat, Vinylether, Alkylfumarate, Alkylmaleate, Styrol, Alkylstyrol, Acrylnitritil und/oder Butadien oder Isopren sowie Hydrierungsprodukten der letztgenannten Dien-Polymeren mit einem durchschnittlichen Molekulargewicht unterhalb von 60 000, vorzugsweise zwischen 10 000 und 40 000, sowie
e) ggf. Klebrigmachende Harze, Füllstoffe, Thixotropiemittel, Pigmente, Leitfähigkeitsadditive, Weichmacher, Kataysatoren, Stabilisatoren, Antioxidantien, UV-Absorptionsmittel, Wachse, Haftvermittler sowie konventionelle Hilfsmittel und Zusatzstoffe.

Ein weiterer Gegenstand der vorliegenden Erfindung ist die Verwendung derartiger Zusammensetzungen zum Verkleben von flächigen Laminierungen, z.B. Küchenarbeitsplatten in der Möbelindustrie, Caravanseitenteilen und Paneele in der Bauindustrie, insbesondere eignen sich diese Klebstoff-Zusammensetzungen für Substrate, die sehr geringe Temperaturbelastung vertragen und für Anwendungen, bei denen der Klebstoff großflächig aufgetragen werden muss.

Die aromatischen Dicarbonsäuren des Polyester-ether -Block-Copolymers werden dabei ausgewählt aus Terephthalsäure, Isophthalsäure, Phthalsäure, Dibenzoesäure, Bis(p-carboxyphenyl)methan, p-Oxy(p-carboxyphenyl)-benzoesäure, Ethylen-bis(p-oxybenzoesäure), Ethylen-bis(p-benzoesäure), Tetramethylen-bis(p-oxybenzoesäure), 1,5-Naphthalindicarbonsäure, 2,6-Naphthalindicarbonsäure, 2,7-Naphthalindicarbonsäure, Phenanthrendicarbonsäure, Anthracendicarbonsäure, 4,4'-Sulfonyldibenzoesäure, Indendicarbonsäure, sowie deren Kern-substituierte Derivative wie C₁-C₁₀- Alkyl, Halogen-, Alkoxy- oder Aryl- Derivate; p-(β-hydroxyethoxy)benzoesäure oder deren Mischungen, wobei der Anteil an Terephthalsäure vorzugsweise mindestens 75 Gew.% der Dicarbonsäuremischung ausmacht. Gegebenenfalls können anteilig aliphatische oder cycloaliphatische Dicarbonsäuren zur Herstellung des Polyester-ether- Block- Copolymers mitverwendet werden.

Als kurzkettige Diolkomponente des Polyester-ether -Block-Copolymers werden dabei C₂- bis C₁₂- Alkandiole, vorzugsweise Ethylenglycol, Propylenglycol, Butandiol, Hexandiol, Octandiol oder deren Mischungen verwendet.

Als Polyetherbaustein für das Block- Copolymer werden Polypropylenglycol, Polyethylenglycol, Copolymer aus Ethylenoxid und Propylenoxid, Poly(oxytetramethylen)glycol (Poly-THF), 1,2-Polybutylenglycol, oder deren Mischungen verwendet. Bevorzugte Molekulargewichtsbereiche für die Polyetherol- Bausteine liegen zwischen von 400 und 20000, vorzugsweise im Bereich von 1000 bis 6000.

Die erfindungsgemäß verwendeten hydroxyfunktionellen Polyester-ether -BlockCopolymere weisen Hydroxylzahlen zwischen 2 mg KOH/g und 50 mg KOH/g, vorzugsweise zwischen 4 mg KOH/g und 20 mg KOH/g, ganz besonders bevorzugt zwischen 5 mg KOH/g und 10 mg KOH/g auf.

Als Polyole für die Komponenten b) und c) können dabei eine Vielzahl von höhermolekularen Polyhydroxyverbindungen verwendet werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die erfindungsgemäßen Zusammensetzungen als Polyole ebenso eingesetzt werden wie deren hydrierte Analoga.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl-(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Als Polyisocyanate können prinzipiell eine Vielzahl von aliphatischen, cycloaliphatischen oder aromatischen Polyisocyanaten eingesetzt werden.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan sowie 1,12-Dodecandiisocyanat (C₁₂DI), ganz besonders bevorzugt sind dabei Diphenylmethan-4,4'-Diisocyanat, oder Diphenylmethan-2,4'-Diisocyanat oder deren höhermolekularen Addukte an Diole mit Malekülargewichten unter 1000 gemäß der Lehre der WO01/40342 oder der noch unveröffentlichten DE- 10150722.4.

Als nicht reaktive thermoplastische Polymere d) sind dabei thermoplastische Polyurethane, thermoplastische Polyester Block- Copolymere, thermoplastische Polyetheramide oder niedermolekulare Polymere von ethylenisch ungesättigten Monomeren enthalten. Konkrete Beispiele hierfür sind (Co)polymere aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatat, Vinylether, Alkylfumarate, Alkylmaleate, Styrol, Alkylstyrol, Acrylnitritil und / oder Butadien oder Isopren sowie Hydrierungsprodukte der letztgenannten Dien- Copolymeren, wie z.B. Styrol-Ethylen- Propylen- oder Styrol- Ethylen- Butylen- Di- oder Tri-blockcopolymere. Üblicherweise haben diese Thermoplasten ein relativ niedriges Molekulargewicht, Niedriges Molekulargewicht bedeutet in diesem Zusammenhang ein durchschnittliches Molekulargewicht unterhalb von 60 000, vorzugsweise liegt das Molekulargewicht derartiger thermoplastischer Polymeren zwischen -10 000 und 40 000. "Nicht reaktiv" im Sinne dieser Erfindung sind dabei alle solche Thermoplasten, die praktisch keinen Zerewitinoff-aktiven Wasserstoff enthalten.

Weiterhin können die erfindungsgemäßen Schmelzklebstoff-Zusammensetzungen noch klebrig machende Harze, wie z.B. Abietinsäure, Abietinsäureester, Terpenharze, Terpenphenolharze, Poly-α-methylstyrol oder aliphatische, aromatische oder aromatisch-aliphatische Kohlenwasserstoffharze oder Coumaron-Inden-Harze enthalten. Gegebenenfalls können diese klebrigmachenden Harze aktive Wasserstoffatome enthalten, so dass diese bei der Umsetzung mit den Di- oder Polyisocyanaten mit in die Bindemittelmatrix des Schmelzklebstoffes eingebaut werden. Konkrete Beispiele hierfür sind hydroxyfunktionelle Ester der Abietinsäure oder auch hydroxylierte Terpenphenolharze. Weiterhin können die Schmelzklebstoff-Zusammensetzungen noch Füllstoffe (z.B. Silikate, Talk, Calciumcarbonate, Tone oder Ruß), oder Thixotropiermittel (z.B. Bentone, pyrogene Kieselsäuren, Harnstoffderivate, fibrillierte oder Pulp-Kurzfasern), Farbpasten bzw. Pigmente oder Leitfähigkeitsadditive wie Leitfähigkeitsruße oder Lithiumperchlorat enthalten.

Ggf. können die erfindungsgemäßen Schmelzklebstoff-Zusammensetzungen noch Weichmacher enthalten, vorausgesetzt, dass diese Weichmacher nicht die Funktionen der übrigen Bestandteile beeinträchtigen. Beispielhaft erwähnt seien die flüssigen Phthalatweichmacher, Weichmacher auf Basis aromatischer Ester wie z.B. Ester der Benzoesäure oder auch feste Weichmacher wie die Dicyclohexylphthalat, Cyclohexandimethanoldibenzoat und dergleichen. Weiterhin können die erfindungsgemäßen Zusammensetzungen noch Katalysatoren, Stabilisatoren, Antioxidantien, UV-Absorptionsmittel, Wachse oder Haftvermittler (z.B. auf der Basis organofunktioneller Silane) oder migrationsfähige, haftungsverstärkende Polyisocyanate gemäß der Lehre der WO 01/40342 und andere konventionelle Hilfsmittel- und Zusatzstoffe enthalten.

Die Auswahl der einzelnen Komponenten der Klebstoff-Zusammensetzung richtet sich dabei in erster Linie nach den geplanten Anwendungsfeldern für diese Klebstoffe. Generell soll das Umsetzungsprodukt b) und / oder c) in der Klebstoff-Zusammensetzung als sogenanntes Weichsegment dienen, dieses soll die Phasenseparation des Hartsegmentes aus dem Umsetzungsprodukt a) unterstützen. Das Hartsegment wird dabei durch die Polyester-Gruppierung des Polyester-Polyether(Block-)Copolymeren gebildet. Aus diesem Grunde sollte vorzugsweise der Anteil an Terephthalsäure im Carbonsäuregemisch des Polyether-Polyester-Blockcopolymeren mindestens 75 Gew. % des gesamten Carbonsäuregemisches betragen, weiterhin sollte das "Weichsegment" des Polyester-Polyether-Blockcopolymeren vorzugsweise aus Poly-THF, hydroxyfunktionellem Polybutadien bzw. hydriertem hydroxyfunktionellen Polybutadien bestehen.

Gegenüber dem bekannten Stand der Technik weisen die erfindungsgemäßen Schmelzklebstoffe-Zusammensetzungen die folgenden Vorteile auf:
Nicht reaktive Polyester-Polyether-Blockcopolymere müssen zur Erzielung des gleichen Effektes ein wesentlich höheres Molekulargewicht haben, was zwangsläufig zu einer sehr viel höheren Schmelztemperatur der Schmelzklebstoff-Zusammensetzung führt.

Aufgrund der reaktiven Isocyanatgruppen wird das Polyester-Polyether-Blockcopolymer-Umsetzungsprodukt fest in die Klebstoffmatrix eingebaut, dies führt zu einer höheren Wärmestandfähigkeit und besseren Hydrolysebeständigkeit und besseren Verträglichkeit der erfindungsgemäßen Schmelzklebstoff-Zusammensetzungen.

Bevorzugte erfindungsgemäße Schmelzklebstoff-Zusammensetzungen enthalten die folgenden Bestandteile:
1. 5 bis 50 Gew.%, vorzugsweise 5 bis 30 Gew.%, besonders bevorzugt 10 bis 20 Gew.% des Umsetzungsproduktes aus einem Polyisocyanat und dem Polyester-Polyether-Blockcopolymeren (Komponente a)),
2. 5 bis 60 Gew.%, vorzugsweise 10 bis 40 Gew. % des Umsetzungsproduktes eines Polyisocyanates mit einem Polyester-Polyol und / oder einem Polyether-Polyol (Komponente b) und / oder c)), wobei dieses Umsetzungsprodukt auch aus Mischungen von Polyester-Polyolen und Polyether-Polyolen und Polyisocyanaten hergestellt werden kann,
3.0 bis 30 Gew.%, vorzugsweise 5 bis 15 Gew.% eines thermoplastischen Polymers gemäß d),
4. 0 bis 60 Gew.%, vorzugsweise 5 bis 40 Gew.% eines klebrigmachenden Harzes sowie
5. ggf. weitere Hilfs- und Zusatzstoffe ausgewählt aus der Gruppe der Füllstoffe, Thixotropiermittel, Farbpigmente, Leitfähigkeitsadditive, Stabilisatoren und Alterungsschutzmittel sowie haftvermittelnde Zusätze,
wobei die Summe sämtlicher Zusammensetzungsbestandteile 100 Gew.% ergibt.

Die erfindungsgemäßen Schmelzklebstoff-Zusammensetzungen eignen sich insbesondere zur Verklebung von flächigen Laminierungen, z.B. Küchenarbeitsplatten in der Möbelindustrie, Caravanseitenteilen und Paneele in der Bauindustrie.

Die nachfolgenden Beispiele sollen die Erfindung näher erläutern, wobei die Auswahl der Beispiele keine Beschränkung des Umfanges des Erfindungsgegenstandes darstellt. Bei den Zusammensetzungen sind dabei alle Mengenangaben Gewichtsteile, wenn nicht anders angegeben.

### Beispiele:

1. Ein OH-terminierter Blockcopolyester wurde aus 350 g Butandiol-1,4, 1000 g Dimethylterephthalat und 2000 g Poly-THF (Molekulargewicht 1000) hergestellt. Es resultierte ein hydroxyfunktionelles Copolymer mit den folgenden Kennzahlen:
   OH-Zahl 7mg KOH/g, Schmelzpunkt 145°C, Viskosität 19 000 mPas bei 190°C (Brookfield-Viskosimeter mit Thermosel® Einrichtung)
2. In gleicher Weise wurden aus 1000 g Dimethylterephthalat, 250 g Isophthalsäure, 450g Butandiol-1,4 und 2000 g Poly-THF 1000 durch Kondensationsreaktion ein hydroxyfunktionelles Blockcopolymer mit den folgenden Eigenschaften hergestellt:
   OH-Zahl: 11 mg KOH/g, Schmelzpunkt 140°C, Shore-D-Härte14, Shore-A-Härte 75
3. Im gleicher Weise wurde aus 1000 g Dimethylterephthalat, 350 g Butandiol-1,4 und 2000 g Poly-THF 1000 ein hydroxyfunktionelles Blockcopolymer mit der OH-Zahl 14 mg KOH/g, Schmelzpunkt 140 °C, Viskosität 24 000 mPa.s bei 190°C, Shore-D-Härte 20, Shore-A-Härte 81 gebildet.
4. Herstellung eines Prepolymers aus Polyester-Polyol und Polyether-Polyol Aus einer Mischung im Gewichtsverhältnis 1:2 eines teilkristallinen hydroxfunktionellen Polyesters auf Basis Adipinsäure und Hexandiol und Poly-THF (Molekulargewicht 2000) mit 4,4'- Diphenylmethandiisocyanat bei einem NCO-OH-Verhältnis von 2,1:1 wurde ein Polyurethanprepolymer mit Ester und Ethergruppierungen gebildet.
5. Herstellung eines Schmelzklebstoffes
   Ein Poly-α-Methylstyrol (Erweichungspunkt, Ring & Ball 99 °C, Molekulargewicht etwa 1400) wurde in einem Rührkessel auf 190 °C erhitzt, bei dieser Temperatur wurde das Umsetzungsprodukt des Copolyesters mit dem Polyisocyanat gemäß Beispielen 1 bis 3 unter Rühren in dem Poly- α-Methylstyrol vollständig gelöst, anschließend erfolgte unter Rühren bei der gleichen Temperatur die Zugabe eines Ethylen-Vinylacetat-Copolymers (Vinylacetatanteil:.50% Schmelzindex (MFI, ISO 1133): bei 190°C / 21,2 N: 3). Nach Erreichen einer vollständig homogenen Mischung wurde das Prepolymer gemäß Beispiel 4 zugegeben.

Von den so erhaltenen Schmelzklebstoff-Zusammensetzungen sowie dem Vergleichsbeispiel auf der Basis der Lehre der EP 0544672 B1 wurden jeweils die Viskosität, der Anstieg der Viskosität über die Zeit unter Temperaturbelastung sowie die Schälfestigkeit bei 90 °C bestimmt.

### Meßmethoden:

Viskosität: nach Brookfield mit Thermosel® Zusatz, Spindel 27, 5 UpM
Alterung erfolgte durch Bestimmung der Viskosität über 16 h offen im Brookfield Viskosimeter bei der angegebenen Temperatur.

### Schälfestigkeit:

Der Klebstoff wurde auf eine MDF-Prüfplatte (Medium Density Fibreboard) aufgerakelt (150 µm). Anschließend wurden direkt Prüfstreifen (2x12 cm, Kraftpapier) auf den Klebstofffilm aufgebracht. Mittels Silikonpapier wurde ein Teil des Klebstofffilms vorher abgedeckt so dass eine Federwaage oder Klemmbacken der Zugprüfmaschine an die Prüfstreifen befestigt werden konnten.
Die Prüfkörper wurden mit 3 N/cm² Druck für 10 sek. verpresst.
Im Trockenschrank wurden diese bei 90°C für 5 min bzw. 30 min gelagert und die Schälfestigkeit entsprechend bestimmt

Schmelzpunkt: Mittels Kofler Heizbank

Die Versuchsergebnisse sind in der nachfolgenden Tabelle aufgeführt.

| | Vergleich | Beispiel 6 | Beispiel 7 | Beispiel 8 | Beispiel 9 | Beispiel 10 |
|---|---|---|---|---|---|---|
| Kristallex F 100 | 40% | 40% | 40% | 40% | 40% | 40% |
| Hytrel 3078 | 10% | | | | | |
| Polyester / Polyisocyanataddukt aus Beispiel 1) | | 10% | | | | |
| Polyester / Polyisocyanataddukt aus Beispiel 1), kettenverlängert NCO/OH Verhältnis 0,7/1 | | | 10% | | | |
| Polyester / Polyisocyanataddukt aus Beispiel 2) | | | | 10% | | |
| Polyester / Polyisocyanataddukt aus Beispiel 3) | | | | | 10% | |
| Polyester / Polyisocyanataddukt aus Beispiel 3), kettenverlängert NCO/OH Verhältnis 0,9/1 | | | | | | 10% |
| Levamelt 500 | 10% | 10% | 10% | 10% | 10% | 10% |
| Prepolymer aus Beispiel 4) | 40% | 40% | 40% | 40% | 40% | 40% |
| | | | | | | |
| | | | | | | |
| Aussehen | homogen | homogen | homogen | homogen | homogen | homogen |
| | | | | | | |
| Viskosität (170°) | 9.000 mPas | 11.300 mPas | 9.200 mPas | 8.000 mPas | 10.800 mPas | 11500 mPas |
| 16 h Viskosität (170°) | 14.000 mPas | 15.000 mPas | 13.800 mPas | 13.600 mPas | 13.900 mPas | 14.100 mPas |
| 90°C Test nach 5 min [g] | 350 | 450 | 450 | 400 | 350 | 400 |
| 90°C Test nach 30 min [g] | 200 | 250 | 250 | 150 | 200 | 200 |

| | | | | | | |
|---|---|---|---|---|---|---|
| Kristallex F 100: Poly-α-methylstyrol (Erweichungspunkt 99 °C, MW 1400, Fa. Eastman) Levamelt 500: Ethylen-Vinylacetat-Copolymer (Fa. Bayer) Hytrel 3078: Polyether-Ester-Block-Copolymer, MFI (Meet Flow Index): 5,0 g/10 min bei 190 °C und 2,16 kg Gewicht, Fa. Du Pont | | | | | | |

## Patentansprüche

1. Polyurethan Schmelzklebstoff-Zusammensetzung bestehend aus
a.)einem Umsetzungsprodukt eines Polyisocyanats im stöchiometrischen Überschuss mit einem hydroxyfunktionellen Polyester-ether-Block-Copolymer auf der Basis aromatischer Dicarbonsäuren
b.)einem Umsetzungsprodukt eines Polyisocyanats mit einem Polyesterpolyol und/oder
c.) einem Umsetzungsprodukt eines Polyisocyanats mit einem Polyetherpolyol sowie
d.) nicht reaktiven thermoplastischen Polymeren ausgewählt aus thermoplastischem Polyurethan, thermoplastischen Polyester BlockCopolymeren, thermoplastischen Polyetheramiden, (Co)polymeren aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatat, Vinylether, Alkylfumarate, Alkylmaleate, Styrol, Alkylstyrol, Acrylnitritil und/oder Butadien oder Isopren sowie Hydrierungsprodukten der letztgenannten Dien-Polymeren mit einem durchschnittlichen Molekulargewicht unterhalb von 60 000, vorzugsweise zwischen 10 000 und 40 000, sowie
e.)ggf. Klebrigmachende Harze, Füllstoffe, Thixotropiemittel, Pigmente, Leitfähigkeitsadditive, Weichmacher, Kataysatoren, Stabilisatoren, Antioxidantien, UV-Absorptionsmittel, Wachse, Haftvermittler sowie konventionelle Hilfsmittel und Zusatzstoffe.

2. Zusammensetzung nach Anspruch 1 **dadurch gekennzeichnet, daß** die aromatischen Dicarbonsäuren des Polyester-ether -Block-Copolymers ausgewählt werden aus Terephthalsäure, Isophthalsäure, Phthalsäure, Dibenzoesäure, Bis(p-carboxyphenyl)methan, p-Oxy(p-carboxyphenyl)-benzoesäure Ethylen-bis(p-oxybenzoesäure), Ethylen-bis(p-benzoesäure), Tetramethylen-bis(p-oxybenzoesäure), 1,5-Naphthalindicarbonsäure, 2,6-Naphthalindicarbonsäure, 2,7-Naphthalindicarbonsäure, Phenanthrendicarbonsäure, Anthracendicarbonsäure, 4,4'-Sulfonyldibenzoesäure, Indendicarbonsäure, sowie deren Kern-substituierte Derivative wie C₁ -C₁₀-Alkyl, Halogen-, Alkoxy- oder Aryl- Derivate, p-(β-hydroxyethoxy)benzoesäure oder deren Mischungen.

3. Zusammensetzung nach Anspruch 2, **dadurch gekennzeichnet, daß** der Anteil an Terephthalsäure im Carbonsäuregemisch mindestens 75 Gew.% beträgt.

4. Zusammensetzung nach Anspruch 1 bis 3, **dadurch gekennzeichnet, daß** der anteilig aliphatische oder cycloaliphatische Dicarbonsäuren zur Herstellung des Polyester-ether- Block- Copolymers mitverwendet werden.

5. Zusammensetzung nach Anspruch 1 bis 4 **dadurch gekennzeichnet, daß** als Polyetherbaustein für das Block- Copolymer Polypropylenglycol, Polyethylenglycol, Copolymer aus Ethylenoxid und Propylenoxid, Poly(oxytetramethylen)glycol, 1,2-Polybutylenglycol, oder deren Mischungen verwendet werden.

6. Zusammensetzung nach Anspruch 1 bis 5 **dadurch gekennzeichnet, daß** als kurzkettige Diolkomponente des Block- Copolymers C₂- bis C₁₂- Alkandiole, vorzugsweise Ethylenglycol, Propylenglycol, Butandiol, Hexandiol, Octandiol oder deren Mischungen verwendet werden.

7. Zusammensetzung nach mindestens einem der vorhergehenden Ansprüche, **dadurch gekennzeichnet, daß** das Polyesterpolyol b) ausgewählt wird aus flüssigen, glasartig amorphen oder kristallinen Polyestern, die durch Kondensation von Di- bzw. Tricarbonsäuren, wie Adipinsäure, Sebacinsäure, Glutarsäure, Azelainsäure, Korksäure, Undecandisäure, Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können.

8. Zusammensetzung nach mindestens einem der vorhergehenden Ansprüche, **dadurch gekennzeichnet, daß** das Polyetherpolyol c) ausgewählt wird aus di- und/oder trifunktionellen Polypropylenglycolen, statistischen und/oder Blockcopolymeren des Ethylenoxids und Propylenoxids, Poly(oxytetramethylen)glycol (Poly-THF), 1,2-Polybutylenglycol oder deren Mischungen mit einem Molekulargewichts-Bereich von 400 bis 20000, vorzugsweise im Bereich von 1000 bis 6000.

## Claims

1. A polyurethane melt adhesive composition consisting of
a) a reaction product of a polyisocyanate in stoichiometric excess with a hydroxy-functional polyester-ether block copolymer based on aromatic dicarboxylic acids,
b) a reaction product of a polyisocyanate with a polyester polyol and/or
c) a reaction product of a polyisocyanate with a polyether polyol as well as
d) non-reactive thermoplastic polymers selected from thermoplastic polyurethane, thermoplastic polyester block copolymers, thermoplastic polyetheramides, (co)polymers of one or more of the following monomers: C₁-C₁₈ alkyl esters of acrylic acid or methacrylic acid, acrylic acid, methacrylic acid, ethylene, vinyl acetate, vinyl propionate, vinyl versatate, vinylether, alkyl fumarate, alkyl maleate, styrene, alkylstyrene, acrylonitrile, and/or butadiene, or isoprene, as well as hydrogenation products of the last cited diene polymers with an average molecular weight below 60,000, preferably between 10,000 and 40,000, as well as
e) if necessary tacky resins, filers, thixotropic agents, pigments, conductivity additives, plasticizers, catalysts, stabilizers, anti-oxidants, UV absorption agents, waxes, bonding agents, as well as conventional adjuvants and additives.

2. The composition according to claim 1, **characterized in that** the aromatic dicarboxylic acids of the polyester ether block copolymer are selected from terephthalic acid, isophthalic acid, phthalic acid, dibenzoic acid, bis(p-carboxyphenyl)methane, p-oxy(p-carboxyphenyl)-benzoic acid, ethylene-bis(p-oxybenzoic acid), ethylene-bis(p-benzoic acid), tetramethylene-bis(p-oxybenzoic acid), 1,5-naphtalene-dicarboxylic acid, 2,6-napthalene-dicarboxylic acid, 2,7-naphtalene-dicarboxylic acid, phenanthrene-dicarboxylic acid anthracene-dicarboxylic acid, 4,4'-sulfonyl-dibenzoic acid, indene-dicarboxylic acid, as well as their nucleus-substituted derivatives such as C₁-C₁₀ alkyl, halogen, alkoxy or aryl derivatives, p-(β-hydroxyethoxy)benzoic acid, or mixtures thereof.

3. The composition according to claim 2, **characterized in that** the terephthalic acid content in the carboxylic acid mixture is at least 75% by weight.

4. The composition according to claim 1 to 3, **characterized in that** proportionally aliphatic or cycloaliphatic dicarboxylic acid are used with it for preparing the polyester-ether block copolymer.

5. The composition according to claims 1 to 4, **characterized in that** polypropylene glycol, polyethylene glycol, copolymers of ethylene oxide and propylene oxide, poly(oxytetramethylene)glycol, 1,2-polybutylene glycol, or mixtures thereof, are used as a polyether component for the block copolymer.

6. The composition according to claims 1 to 5, **characterized in that** C₂-C₁₂ alkanediols, preferably ethylene glycol, propylene glycol, butanediol, hexanediol, octanediol or mixtures thereof are used as a short-chain diol component of the block copolymer.

7. The composition according to at least one of the preceding claims, **characterized in that** the polyester polyol b) is selected from liquid, glassy amorphous or crystalline polyesters, which may be prepared by condensation of di- or tri-carboxylic acids, such as adipic acid, sebacic acid, glutaric acid, azelaic acid, suberic acid, undecanedioic acid, dodecanedioic acid, 3,3-dimethylglutaric acid, terephthalic acid, isophthalic acid, hexahydrophthalic acid, dimer fatty acid, or mixtures thereof with low molecular diols or triols, such as for example ethylene glycol, propylene glycol, diethylene glycol, triethylene glycol, dipropylene glycol, 1,4-butanediol, 1,6-hexanediol, 1,8-octanediol, 1,10-decanediol, 1,12-dodecanediol, dimer fatty alcohol, glycerol, trimethylolpropane, or mixtures thereof.

8. The composition according to at least one of the preceding claims, **characterized in that** the polyetherpolyol c) is selected from difunctional and/or trifunctional polypropylene glycols, random and/or block copolymers of ethylene oxide and propylene oxide, poly(oxytetramethylene)glycol (poly-THF), 1,2-polybutylene glycol, or mixtures thereof with a molecular weight range from 400 to 20,000, preferably in the range from 1,000 to 6,000.

## Revendications

1. Composition de colle thermofusible à base de polyuréthane, constituée par
a) un produit réactionnel d'un polyisocyanate en un excès stoechiométrique avec un copolymère séquencé de polyester-éther à fonctionnalité hydroxyle, à base d'acides dicarboxyliques aromatiques ;
b) un produit réactionnel d'un polyisocyanate avec un polyesterpolyol ; et/ou
c) un produit réactionnel d'un polyisocyanate avec un polyétherpolyol ; et
d) des polymères thermoplastiques non réactifs choisis parmi du polyuréthane thermoplastique, des copolymères séquencés de polyesters thermoplastiques, des polyétheramides thermoplastiques, des (co)polymères d'un ou de plusieurs monomères parmi les monomères suivants : des esters alkyliques en C₁-C₁₈ de l'acide acrylique ou de l'acide méthacrylique, l'acide acrylique, l'acide méthacrylique, l'éthylène, l'acétate de vinyle, le propionate de vinyle, le versatate de vinyle, l'éther vinylique, des fumarates d'alkyle, des maléates d'alkyle, le styrène, l'alkylstyrène, l'acrylonitrile et/ou le butadiène ou l'isoprène ainsi que des produits d'hydrogénation des polymères diéniques mentionnés en dernier lieu possédant un poids moléculaire moyen inférieur à 60.000, de préférence entre 10.000 et 40.000 ; et
e) le cas échéant, des résines qui rendent collant, des matières de charge, des agents thixotropes, des pigments, des additifs pour améliorer la conductibilité, des plastifiants, des catalyseurs, des stabilisateurs, des antioxydants, des agents absorbants le rayonnement UV, des cires, des agents améliorant l'adhérence ainsi que des adjuvants et des additifs conventionnels.

2. Composition selon la revendication 1, **caractérisée en ce que** les acides dicarboxyliques aromatiques du copolymère séquencé de polyester-éther sont choisis parmi l'acide téréphtalique, l'acide isophtalique, l'acide phtalique, l'acide dibenzoïque, le bis(p-carboxyphényl)-méthane, l'acide p-oxy(p-carboxyphényl)benzoïque, l'acide éthylène-bis(p-oxybonzoïque), l'acide éthylène-bis(p-benzoïque), l'acide tétraméthylène-bis(p-oxybenzoïque), l'acide 1,5-naphtalènedicarboxylique, l'acide 2,6-naphtalènedicarboxylique, l'acide 2,7-naphtalènedicarboxylique, l'acide phénanthrènedicarboxylique, l'acide anthracènedicarboxylique, l'acide 4,4'-sulfonyldibenzoïque, l'acide indènedicarboxylique, ainsi que leurs dérivés substitués au noyau, tels que les dérivés alkyle en C₁-C₁₀, halogène, alcoxy ou aryle, l'acide p-(β-hydroxyéthoxy)benzoïque ou leurs mélanges.

3. Composition selon la revendication 2, **caractérisée en ce que** la fraction d'acide téréphtalique dans le mélange d'acides carboxyliques représente au moins 75 % en poids.

4. Composition selon l'une quelconque des revendications 1 à 3, **caractérisée en ce qu'**on utilise de manière conjointe la fraction des acides dicarboxyliques aliphatiques ou cycloaliphatiques pour la préparation du copolymère séquencé de polyester-éther.

5. Composition selon l'une quelconque des revendications 1 à 4, **caractérisée en ce qu'**on utilise, à titre de constituant polyéther pour le copolymère séquencé, du polypropylèneglycol, du polyéthylèneglycol, un copolymère d'oxyde d'éthylène et d'oxyde de propylène, du poly(oxytétraméthylène)glycol, du 1,2-polybutylèneglycol, ou leurs mélanges.

6. Composition selon l'une quelconque des revendications 1 à 5, **caractérisée en ce qu'**on utilise, à titre de composant de diol à courte chaîne du copolymère séquencé, des alcane(en C₂-C₁₂)diols, de préférence l'éthylèneglycol, le propylèneglycol, le butanediol, l'hexanediol, l'octanediol ou leurs mélanges.

7. Composition selon au moins une des revendications précédentes, **caractérisée en ce que** le polyesterpolyol b) est choisi parmi des polyesters liquides, amorphes vitreux ou cristallins que l'on peut préparer par condensation d'acides dicarboxyliques, respectivement tricarboxyliques, tels que l'acide adipique, l'acide sébacique, l'acide glutarique, l'acide azélaïque, l'acide subérique, l'acide undécanedioïque, l'acide dodécanedioïque, l'acide 3,3-diméthylglutarique, l'acide téréphtalique, l'acide isophtalique, l'acide hexahydrophtalique, l'acide gras dimère, ou leurs mélanges avec des diols, respectivement des triols à bas poids moléculaire, comme par exemple l'éthylèneglycol, le propylèneglycol, le diéthylèneglycol, le triéthylèneglycol, le dipropylèneglycol, le 1,4-butanediol, le 1,6-hexanediol, le 1,8-octanediol, le 1,10-décanediol, le 1,12-dodécanediol, l'alcool gras dimère, le glycérol, le triméthylolpropane ou leurs mélanges.

8. Composition selon au moins une des revendications précédentes, **caractérisé en ce que** le polyétherpolyol c) est choisi parmi des polypropylèneglycols difonctionnels et/ou trifonctionnels, des copolymères statistiques et/ou séquencés de l'oxyde d'éthylène et de l'oxyde de propylène, le poly(oxytétraméthylène)glycol (poly-THF), le 1,2-polybutylèneglycol ou leurs mélanges, avec une plage de poids moléculaire de 400 à 20.000, de préférence dans la plage de 1000 à 6000.
